# EUROPEAN PATENT APPLICATION

(11) **EP 2 965 986 A1**
(43) Date of publication of application: **13.01.2016**
(21) Application number: 15175762.2
(22) Date of filing: 07.07.2015
(51) Int. Cl.: B64C 25/16, B64D 1/06

(54) **ABUTMENT FOR AIRCRAFT LANDING GEAR DOORS**

(30) Priority: 11.07.2014 GB 201412403
(71) Applicant: Airbus Operations Limited, Bristol BS34 7PA (GB)
(72) Inventor: THOMPSON, Robert Ian, Bristol, BS34 7PA (GB); HANCOCK, Nicholas John, Bristol, BS34 7PA (GB)
(74) Representative: EIP

(57) **Abstract**

An assembly providing an abutment for a door is disclosed. The assembly is arranged to hold the abutment (58) remotely from a side of an opening which is closed by the door (53). The abutment (58) may be moveable between deployed and retracted configurations to allow objects to pass through the opening while providing an abutment when the door is in a closed configuration.

## Description

### FIELD OF THE INVENTION

The present invention relates to an abutment for reacting a closing force applied to a door. In particular, the invention relates to a moveable abutment for reacting a closing force applied to a door when a door is closed, which abutment can be moved away from the opening closed by the door to allow objects to pass through the opening. More particularly, the invention relates to a moveable abutment for landing gear doors of an aircraft.

### BACKGROUND OF THE INVENTION

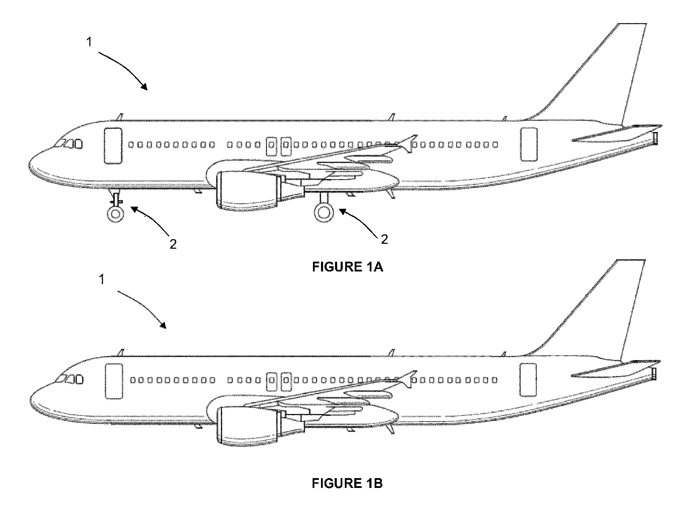

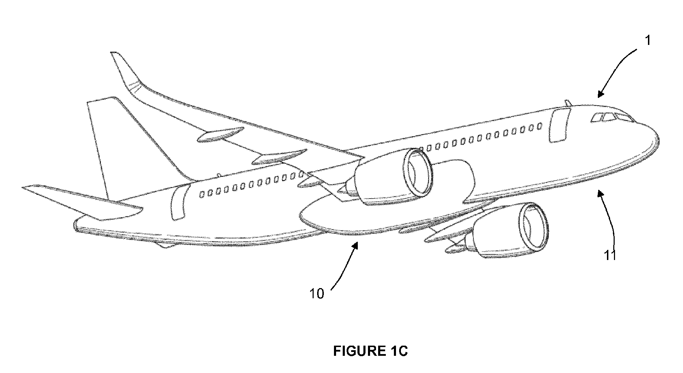

Doors for closing doorways and/or openings are provided in many contexts, including in ships, vehicles in general, and aircraft in particular. When a door is provided to close an opening, it is generally necessary to provide some form of abutment against which the door can rest so that it is held securely in its closed position in the opening. Such an abutment prevents a door from simply passing straight through the opening when it is moved from an open position to a closed position. In some instances, a moveable actuation system is provided to open and/or close the door, and in certain arrangements the closing mechanism can provide a closing force, to actively hold the door in its closed position. In these instances, the abutment for the door must constantly react such a closing force. Doors must also open out of the way of the opening to allow objects to pass through them, and any abutment provided for the door must also avoid obstructing passage of objects through the opening. In some instances, providing an abutment adjacent a side of the opening provides sufficient reaction for closing forces and ample space for objects to pass through. However, there are instances where it is necessary to provide an abutment away from the sides of the opening. This is particularly the case if the door is long or wide, so that it needs support by abutments at one or more points along its width or its length. In such instances, it is necessary to provide an abutment located remotely from sides of the opening. A particular instance where this can be relevant is in bay doors for an aircraft. Such bay doors may include doors to a landing gear bay, where landing gear is stowed, when not deployed, and where doors are used to close the landing gear bay when the aircraft is in flight. Other applications may include bomb bay doors for bomber aircraft, or cargo bay doors for cargo aircraft. An example of a passenger aircraft 1 is shown in Figures 1A and 1B. Figure 1A shows the aircraft with landing gear 2 deployed as is normal for take-off and landing. As shown in Figure 1B, aircraft 1 has its landing gear 2 stowed and the bays for receiving the landing gear will be closed with landing gear bay doors, to protect the landing gear and to provide a smooth aerodynamic surface during the main flight of the aircraft, as is shown in Figure 1C. Nose landing gear is generally enclosed within a nose section 11 of the aircraft, while main landing gear is stowed in the underbelly 10 of the main fuselage of the aircraft.

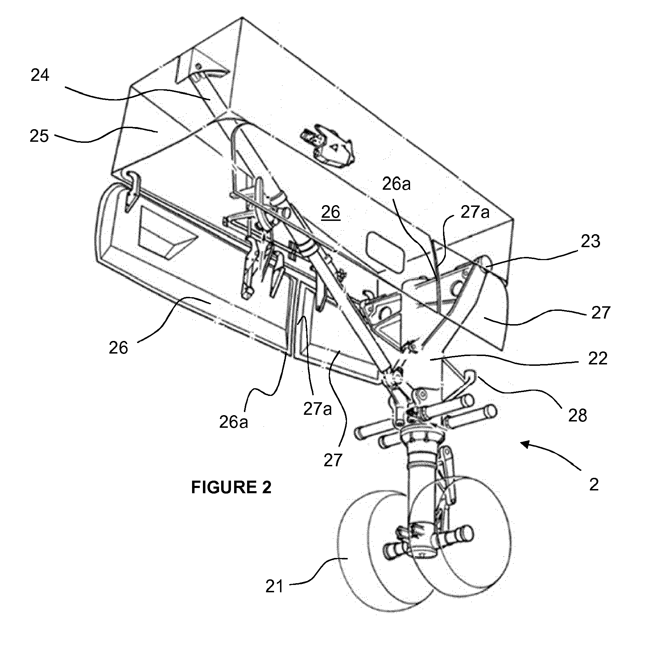

Figure 2 shows a known landing gear 2 of an aircraft 1. Landing gear wheels 2 are deployed by rotation of a landing gear post 22 about an axis 23. This is carried out by an actuator, such as a hydraulic ram 24. When stowed, the landing gear 2 is received within landing gear bay 25.

The landing gear bay 25 is closed by landing gear bay doors 26 and 27. In practice, the rear doors 27 are coupled to the motion of the landing gear post 22 and when landing gear 2 is retracted, the rear doors 27 close first and rest on abutment 28, which is provided attached to on the landing gear post 22. The front landing gear bay doors 26 are closed just after the rear landing gear bay doors 27. The rearward edge 26a of the front doors 26, when the doors are closed, is pre-stressed or pre-crushed onto the leading edge 27a of the rear doors 27.

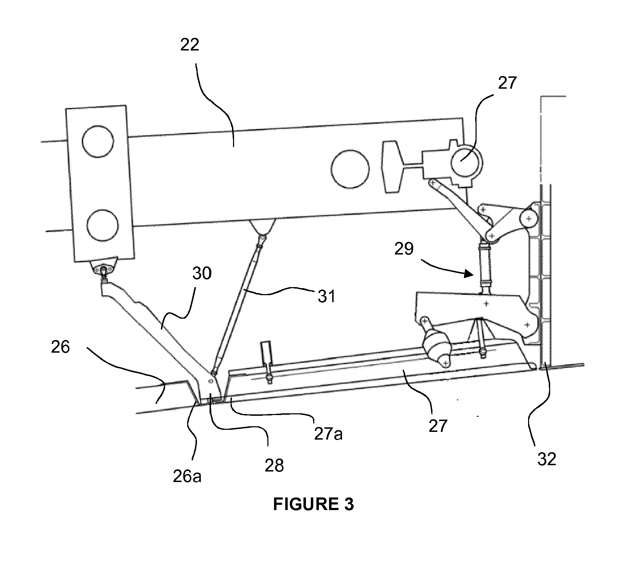

Figure 3 shows a side view of internal detail of the arrangement of Figure 2 when the landing gear 2 is in its stowed position. A linkage mechanism 29 can be seen, which links motion of the rear doors 27 to the motion of the landing gear post 22. The abutment of the front 26 and rear 27 landing gear bay doors on the abutment 28, which is provided on landing gear post 22, can also be seen in Figure 3.

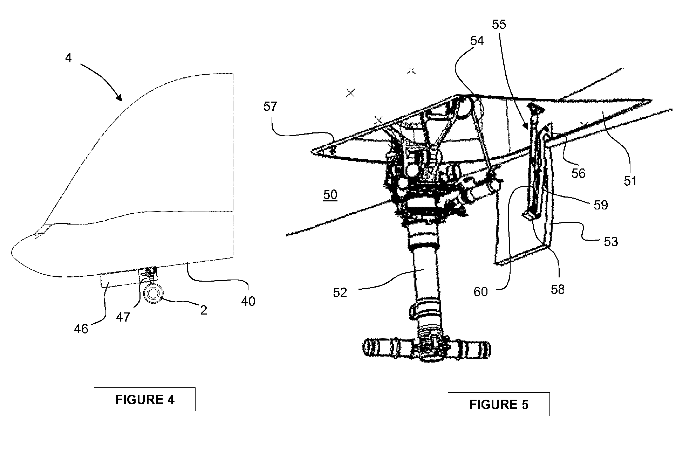

However, the arrangement of Figure 3 is not the most suitable to all aircraft applications. Nor is it the most suitable for other vehicles which do not include landing gear 2. For example, in the case of bomb bay or cargo bay doors, the landing gear will not be present and, where multi-section doors are required, it may be necessary to provide abutment 28 by other means. Further, in differently configured aircraft, such as large cargo aircraft, an example of a nose section of which is illustrated in Figure 4, the profile of the fuselage 40 of the aircraft 4 extends downwardly around the area of landing gear 2, which creates a large distance from the landing gear post 22 and its axis 23, to the landing gear doors 46 and 47, when the landing gear 2 is stowed. If using the arrangement illustrated in Figure 3, then the extension pieces 30 and 31 holding the abutment 28 in place would have to be exceptionally long, which may make them unstable or of excessive weight. Further, the distance between the pivot 27 of Figure 3 and the lower edge 32 of the fuselage of the aircraft may be so large that extension member 31 at least, would clash with the fuselage 32 when the landing gear is in its deployed position. The present invention therefore seeks to address these issues and to provide an improved abutment arrangement for a door.

### SUMMARY OF THE INVENTION

A first aspect of the invention provides an assembly for providing an abutment for a door, comprising: an abutment member, for reacting a closing force applied to the door; a mount for mounting the abutment to a side of an opening which can be closed by the door; and an abutment carrying member, arranged between the abutment member and the mount, to hold the abutment away from a side of the opening. A bracing member is provided, for bracing the abutment against a point substantially out of the plane of the opening.

The arrangement of the invention provides an abutment which is mounted to a side of the opening, and held away from the side of the opening to provide the necessary abutment at a location remote from the side of the opening, so can provide the abutment toward a centre of the opening, and can provide a gap between the abutment and the side or sides of the opening. This provides the necessary abutment without the need for attaching the abutment to an item which will pass through the opening, such as aircraft landing gear, and can provide a more efficient structure, which can be adapted to a wide range of types of opening in different implementations. The assembly is therefore arranged to hold the abutment remotely from a side of an opening which is closed by the door. The abutment may be moveable between deployed and retracted configurations to allow objects to pass through the opening, while providing an abutment when the door is in a closed configuration. The abutment may therefore be moveable.

The abutment carrying member may be mounted towards the first side of the opening and the door may be mounted towards the first side of the opening, or opposite the side of the opening to which the abutment is mounted. In this way, both mounts for the door itself and for the abutment for the door can be located at a same side of the opening which is closed by the door and so the necessary load bearing features of the opening can be substantially co-located to enable the door and its abutment to be mounted at, or near to, the same load-bearing features of a structure comprising the opening, whilst still providing an abutment remote from the mounting point of the door.

The abutment member may be moveable on the mount, between a first position, located substantially in the opening, for bracing the door in its closed position, and a second position, remote from the first position, preferably located away from the opening, for allowing an object to pass through the opening. This arrangement allows the abutment to be moved into and out of position, so that when the doors are open and items need to pass through the opening, then the abutment is out of the way of those items, but still can be moved back to the first position when the door is closed to provide the necessary abutment substantially in the mouth of the opening.

The abutment member may be rotatably or pivotably attached to the mount. This can allow the abutment member to be rotated out of the opening to allow objects to pass through the opening.

The abutment member may be pivotable about the mount to move from the first position to the section position.

The abutment member may be pivotable about the abutment carrying member. This can further allow the abutment to be rotated about the member to which it is mounted to assist with moving it out of the way of the opening. The motion of the abutment member may be coupled with the motion of the door of the opening. In this way, a single action of opening the door, may also move the abutment member between its first and section positions to move it out of the way of the opening when the door is open.

Motion of the door may cause motion of the abutment member relative to its mount.

Motion of the door may cause motion of the abutment member relative to the abutment carrying member. Therefore an opening motion of the door can further influence the relative positions of the abutment member and the abutment carrying member.

The bracing member may be for bracing the abutment against a point inside or outside or generally outside of the plane of the opening when in the first position. In this way, loads applied to the abutment member can be transferred to a point remote from the opening and the hinges of the door, to provide a form of triangulation of the forces, to increase the strength and stability of the abutment member.

Motion of the door may cause motion of the bracing member relative to the mount of the abutment member. This may further allow both the abutment member and its bracing member to be moved out of the way of the opening by the opening motion of the door.

The bracing member may be braced between the door and the point inside the opening, and as the abutment member moves to the second position the bracing member may move toward a side of the opening.

As the abutment member moves to the second position, the bracing member may move away from a centre or a centre line of the opening. This enables the opening to be cleared for the passage of objects through the opening when the doors are open.

The motion of the bracing member may be coupled to the motion of the abutment carrying member.

The motion of the bracing member may be coupled to the motion of the door. These features allow a single actuation mechanism, such as that which opens and closes the door, to move all of the door, the abutment member and the bracing member away from the centre of the opening when the door is opened.

Rotation of the door about a hinge of the door may be coupled to rotation of the abutment carrying member about the mount, which further enables this effect.

The assembly may comprise a four bar linkage. A four bar linkage can enable the abutment member and the bracing member to be displaced from a position where the bracing member braces the abutment member between a wall of a cavity behind the opening, such as a bay of an aircraft or other vehicle, and a further position in which the bracing member is located close to a side of the opening to allow passage of objects through the opening. A base of the four bar linkage may be attached to the vehicle and the abutment member may be provided distal from the base, on a bar of the four bar linkage.

Motion of the four bar linkage may be coupled to the motion of the door. The assembly may comprise first and second four bar linkages. The first and second four bar linkages may share a common member. The common member may be the abutment carrying member. By use of these features, it is possible to provide a first four bar linkage comprising at least a part of the door, at least a part of the abutment carrying member and the connecting member. Motion of the connecting member may be coupled to one or both of the abutment member and the abutment bracing member. The connecting member may form a part of a second four bar linkage, along with any or all of the abutment carrying member and the abutment bracing member, to move any or all of the abutment carrying member, the abutment bracing member, and the abutment member between the first and second positions.

The assembly may find utility in any road, rail, marine, space or airborne vehicle, in particular an aircraft.

### BRIEF DESCRIPTION OF THE DRAWINGS

Embodiments of the invention will now be described with reference to the accompanying drawings, in which:
Figure 1A to 1C show an aircraft to which the invention may be applied;
Figure 2 shows a known landing gear bay, landing gear and land gear bay door assembly;
Figure 3 shows detail of the assembly of Figure 2 in a stowed configuration;
Figure 4 shows a further form of aircraft where the invention may be implemented;
Figure 5 shows a landing gear bay comprising an assembly of the invention;
Figures 6 to 8 show the assembly of the present invention in sequential states of stowage, from the deployed state shown in Figure 5;
Figures 9 to 11 show an alternative perspective view of the assembly of the invention moving from a stowed or open position to a deployed or closed-doored position;
Figure 12 shows a bracing arrangement for reacting forces within a bay wall which are created by the assembly of the invention.

### DETAILED DESCRIPTION OF EMBODIMENT(S)

The following description and related figures illustrate the invention, which can be used in combination with any aspect of the aircraft and landing gear of figures 1 to 4, and is generally intended to replicate, replace or combine with the function of abutment 28 of figure 2.

Figure 5 shows a portion of a fuselage 50 of an aircraft, comprising a landing gear bay 51, and showing a landing gear 52 in a deployed position (wheels not shown for clarity of illustration). For further clarity of illustration, only one landing gear bay door 53 is shown, but two or more may be used in practice. In the specific embodiment shown, the landing gear bay 51 is in a nose section of a fuselage of an aircraft and the landing gear 52 is therefore the nose landing gear of the aircraft in the illustrated example. However, it will be appreciated that the assembly of the present invention can be applied to any door requiring an abutment located distal from a side of the opening which is closed by the door.

A drive linkage 54 is shown, which drives the opening and closing motion of the door 53. This drive linkage may be driven independently of landing gear 52, or may be linked to the deployment and stowage motion of the landing gear 52. An assembly of the present invention 55 is shown and it can be seen that the assembly comprises a mount 56, located toward a side of the opening 57 of the landing gear bay 51. An abutment member 58 is illustrated, which is connected to the mount 56 via an abutment carrying member 59. A bracing member 60 can also be seen, which is, in the illustrated configuration, in a retracted position, to allow the landing gear 52 to pass in and out of the opening 57. When the door 53 is in an open position, the assembly of the present invention 55 is therefore in a retracted position as illustrated in Figure 5. Other configuration steps during the deployment and stowage sequence of the assembly will be described in greater detail in the following Figures.

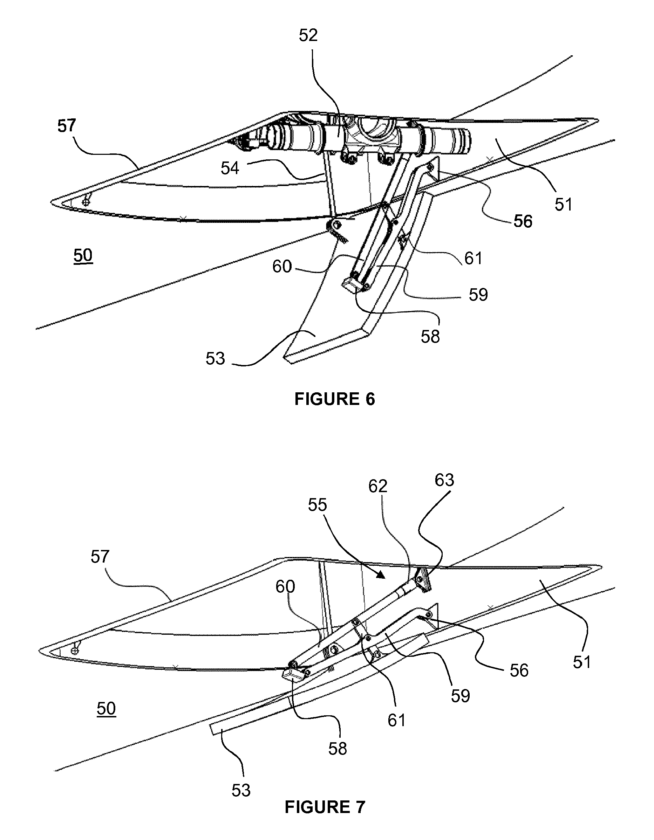

Figure 6 shows the undercarriage 52 in a partially retracted configuration. Here, it can be seen that the door 53 has reached a partially closed position, and the abutment member 58 has also partially travelled from its retracted position shown in Figure 5, towards the plane of the opening 57 and also towards a centre line of the opening 57 (centre line not shown). The abutment carrying member 59 has partially rotated around its mount 56. The abutment member 58 has also partially rotated with respect to the abutment carrying member 59. This rotation is induced by connecting member 61, which connected to the abutment carrying member 59 and to the bracing member 60 and to the door 53. This connecting member 61 therefore couples both the motion of the abutment carrying member 59 and the bracing member 60 to the motion of the door 53. In this way, when the drive linkage 54 drives the door between its open and closed positions, the drive is transferred to the bracing member 60 and the abutment carrying member 59, and on to the abutment member 58.

Figure 7 shows a further configuration of the door and abutment assembly, as it approaches the closed position of the door, and the extended position of the abutment assembly 55. It can be seen that, as the door approaches its closed position and the assembly 55 moves in conjunction with the door, the abutment 58 is located nearer to the door 53, and the distal end 62 of the bracing member 60 approaches the inner wall of the landing gear bay 51. The bracing member is provided at the distal end 62 with a foot 63, which is arranged to transfer a bracing force transferred along the bracing member 60 to the wall of the landing gear bay 51. In the configuration illustrated in Figure 7, the foot 63 is not yet in contact with the landing gear bay wall.

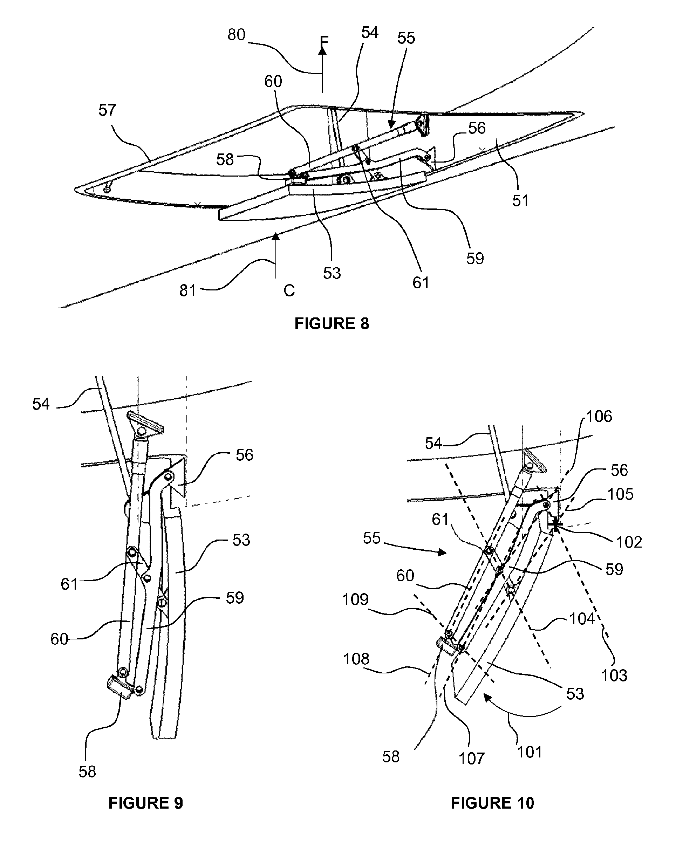

Figure 8 shows the closed configuration of the landing gear bay door 53 and the abutment assembly 55. In this configuration, it can be seen that the bracing member 60 braces the abutment member 58 against the inner wall of the landing gear bay 51 via foot 63. The abutment carrying member 59 connects the abutment member 58 to the mount 56. Therefore, a closing force, if applied in the direction of arrow 80 along linkage 54 creates a closing force C in the direction of arrow 81, which is reacted by abutment member 58, and is transferred to foot 63, which transfers the force to a point within the opening in the landing gear bay 51, against a wall of the landing gear bay.

Figures 9 to 11 show the closing sequence of the landing gear bay door 53 from a different perspective, where the relative motion of the bracing member 60, the abutment carrying member 59, the abutment member 58 and the connecting member 61 can be seen more clearly. In Figure 9, the door 53 is in its open position, and the abutment carrying member 59, and the bracing member 60 are substantially parallel with a principal plane of the door 53.

In Figure 10, the door 53 has partially rotated towards its closed position in a direction of arrow 101. Door 53 rotates about a pivot point, which may be a pivot point of its hinge (not shown) or essentially a virtual pivot point created by the arrangement of its hinge. For illustrative purposes, this point of rotation is indicated at point 102 in Figure 10. Dashed lines 103, 104, 105 and 106 illustrate an effective four bar linkage which is created between the mount 56, the pivot point for the door 53, the connecting member 61 and the abutment carrying member 59.

A second four bar linkage is created between the connecting member 61, the bracing member 60, the abutment member 58, and the abutment carrying member 59, as illustrated by dashed lines 104, 107, 108 and 109. Use of one or both of these four bar linkages, allows the relative rotational positions of the members making up the assembly 55 to be changed as the assembly rotates between its extended position and its retracted position when a door is open. Use of such four bar linkages can cause rotation of the abutment member in a first direction upon rotation of the abutment carrying member in a second direction. Rotation of the abutment carrying member can also cause relative rotation of the bracing member with respect to the abutment carrying member. Motion of the abutment carrying member in a first direction can cause relative rotation of the bracing member and/or the abutment member in a second direction opposite the first direction.

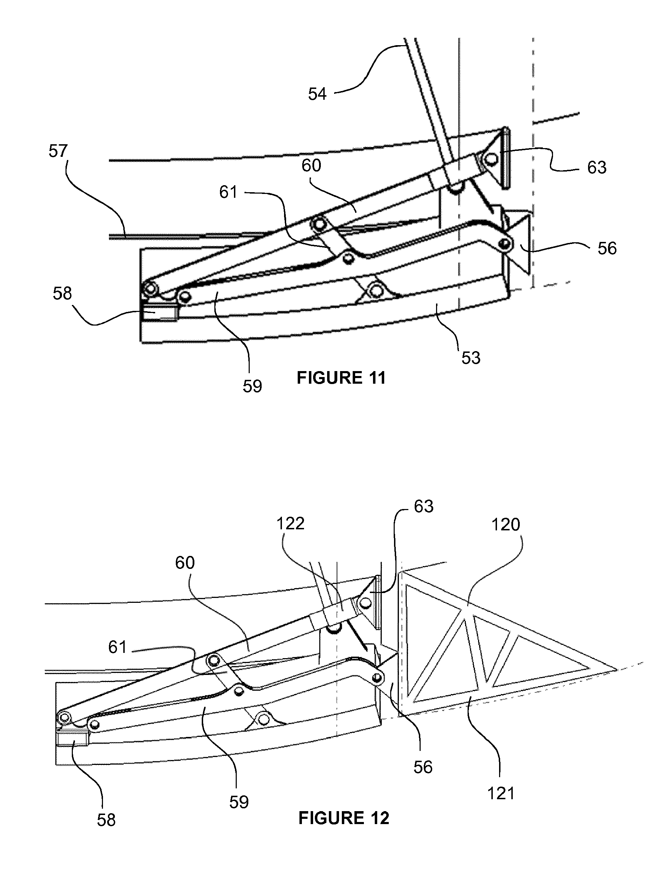

Figure 11 illustrates the door and abutment assembly in a closed configuration of the door, with the abutment assembly in an extended configuration. In this configuration, the foot 63 is pressed against a wall (not shown) of the undercarriage bay 51 and the door 53 is pressed against the abutment member 58. In this configuration, one or more landing gear bay doors may abut the abutment member 58, therefore a pair of doors may abut the abutment member, or even four doors may all abut a single abutment member 58, either directly, or by one or more doors abutting the abutment member via one or more further doors. It is therefore possible for an abutment member 58 to be mounted to a first side of the opening, while doors hinged on an opposite side of the opening abut the abutment member. A single abutment member and assembly of the invention may alternatively or additionally be provided for each of several doors closing an opening, or one may be provided for reacting closing forces applied to a number of doors which close against a single abutment member 58.

In the case of an aircraft fuselage, it may be necessary to transfer forces applied by foot 63 to a wall of the landing gear bay 51 out to the skin of the aircraft, as is shown schematically in Figure 12. To this end, a further bracing member 120 may be provided to transfer forces applied by the bracing member 60 to an inner wall of the bay, back out to an outer wall 121 of a fuselage to which the assembly is applied.

When assembling the doors and assembly of the invention, it is often necessary to provide some adjustability in one or more of the members making up the assembly. This is because is often some variation in profile and tolerance variation in components making up the door and abutment assembly, and the net effect of these is that some adjustment will need to be made in order to provide the correct degree of contact and loading between the door or doors and the abutment member. This can be achieved by altering the length of one or more of the members in the assembly, such as, for example, the abutment carrying member, the bracing member and the connecting member. An adjustment means 122 can be added to one or more of the members. This can be implemented using threaded adjustment means, with the assembly member having two separate parts, connected via an adjustable, preferably threaded, interface, such as a turnbuckle or screw jack arrangement, for example.

Although the detailed embodiment described shows a moveable abutment member 58, it will be appreciated that it may in some cases be beneficial to provide a fixed abutment member 58, attached toward a side of an opening 57 by a fixed mounting member 59, and an optional fixed bracing member 60. In this case, no movement of the abutment member 58 would be necessary and so the connecting member 61 would also be omitted from the assembly. So long as the configuration of the abutment and its abutment carrying member 59 is sufficient that desired objects can pass through the opening which is closed by the door 53, then it may not be necessary to move the abutment 58 away from the opening, toward a side of the opening to allow objects to pass. The assembly can therefore exist in a fixed arrangement, or in a moveable arrangement for moving the abutment out of the way of the opening 57. Although the exemplary embodiment is described with respect to aircraft landing gear bay doors, the invention can also be applied to cargo bay doors of aircraft, bomb bay doors of aircraft and the like. The invention can also be applied to other doors applied to openings in different situations, where an abutment is required located in the opening but away from its sides, and the moveable configuration of the arrangement can be particularly beneficial when the abutment must move away from the centre of the opening when a door is opened to allow objects to pass through the resulting opening.

Although the invention has been described above with reference to one or more preferred embodiments, it will be appreciated that various changes or modifications may be made without departing from the scope of the invention as defined in the appended claims.

## Claims

1. An assembly for providing an abutment for a door, comprising:
an abutment member, for reacting a closing force applied to the door;
a mount for mounting the abutment to a side of an opening which can be closed by the door;
an abutment carrying member, arranged between the abutment member and the mount, to hold the abutment away from a side of the opening; and
a bracing member, for bracing the abutment against a point substantially out of the plane of the opening.

2. An assembly according to claim 1, wherein the abutment carrying member is mounted toward a first side of the opening and the door is mounted toward the first side of the opening, or opposite the first side of the opening.

3. An assembly according to claim 1 or claim 2, wherein the abutment member is movable on the mount, between a first position located substantially in the opening, for bracing the door in its closed position, and a second position, remote from the first position, preferably located away from the opening, for allowing an object to pass through the opening.

4. An assembly according to any of claims 1, 2 or 3, wherein the abutment member is rotatably attached to the mount, and
wherein the abutment member is preferably pivotable about the mount, to move from the first position to the second position.

5. An assembly according to any of the preceding claims, wherein the abutment member is pivotable about the abutment carrying member.

6. An assembly according to any of the preceding claims, wherein motion of the abutment member is coupled with the motion of the door of the opening.

7. An assembly according to claim 6, wherein motion of the door causes motion of the abutment member relative to its mount; or
wherein motion of the door causes motion of the abutment member relative to the abutment carrying member.

8. An assembly according to any of claims 3 to 7, wherein the bracing member is configured for bracing the abutment against a point substantially out of the plane of the opening when in the first position, wherein the motion of the door preferably causes motion of the bracing member relative to the mount.

9. An assembly according to claim 8, wherein in the first position, the bracing member is braced between the door and a point inside the opening, and as the abutment member moves to the second position, the bracing member moves toward a side of the opening; and
wherein as the abutment member moves to the second position, the bracing member preferably moves away from a centre of the opening.

10. An assembly according to any of claims 8 to 9, wherein the motion of the bracing member is coupled to the motion of the abutment carrying member.

11. An assembly according to any of the preceding claims, wherein rotation of the door about a hinge of the door is coupled to rotation of the abutment carrying member about the mount.

12. An assembly according to any of the preceding claims, comprising a four bar linkage, wherein a base of the four bar linkage is preferably attached to the vehicle and the abutment member is preferably provided distal from the base, on a bar of the four bar linkage.

13. An assembly according to claim 12, wherein motion of the four bar linkage is coupled to motion of the door.

14. An assembly according to any preceding claim, comprising first and second four bar linkages, wherein the first and second four bar linkages preferably share a common member, the common member preferably being the abutment carrying member.

15. A vehicle, preferably an aircraft, comprising the assembly of any of the preceding claims.
